**Europäisches Patentamt**

(19) **European Patent Office**

**Office européen des brevets**

(11) Veröffentlichungsnummer: **0 121 540**
**B1**

(12) **EUROPÄISCHE PATENTSCHRIFT**

(45) Veröffentlichungstag der Patentschrift:
**03.06.87**

(51) Int. Cl.⁴: **B 01 D 51/02, F 01 N 3/02,**
**B 03 C 3/14**

(21) Anmeldenummer: **83903169.7**

(22) Anmeldetag: **30.09.83**

(86) Internationale Anmeldenummer:
**PCT/DE 83/00166**

(87) Internationale Veröffentlichungsnummer:
**WO 84/01523 (26.04.84** Gazette **84/11)**

(54) **VERFAHREN UND VORRICHTUNG ZUM REINIGEN VON GASEN.**

(30) Priorität: **20.10.82 DE 3238793**

(43) Veröffentlichungstag der Anmeldung:
**17.10.84 Patentblatt 84/42**

(45) Bekanntmachung des Hinweises auf die Patenterteilung:
**03.06.87 Patentblatt 87/23**

(84) Benannte Vertragsstaaten:
**AT BE CH DE FR GB LI NL SE**

(56) Entgegenhaltungen:
**keine**

(73) Patentinhaber: **ROBERT BOSCH GMBH,**
**Robert-Bosch-Platz 1, D-7016 Gerlingen-Schillerhöhe (DE)**

(72) Erfinder: **ARTMANN, Joachim, Hanfbergstrasse 26,**
**D-7301 Aidlingen (DE)**
Erfinder: **BRAUER, Ilan, Zellerstrasse 76,**
**D-7000 Stuttgart 1 (DE)**
Erfinder: **BRÜGGEN, Gerhard, Löwenstrasse 95,**
**D-7000 Stuttgart 70 (DE)**
Erfinder: **KARR, Dieter, Hans-Reyhing Strasse 47,**
**D-7250 Leonberg (DE)**
Erfinder: **SCHREIBER, Roland, Onstmettinger Weg 21,**
**D-7000 Stuttgart 80 (DE)**

## Beschreibung

Die Erfindung geht von einem Verfahren mit einer Vorrichtung gemäss der Gattung des Hauptanspruchs aus. Ein Verfahren und eine Vorrichtung dieser Art sind bereits in der DE-A-2 408 511 beschrieben worden. Dabei wurden teilchenbehaftete Gase in ein elektrisches Feld gebracht, in dem auf den Teilchen die Polladungen induziert wurden. Unter Einwirkung des Feldes und einer zentrifugalen Kraft wurde erreicht, dass die polarisierten Teilchen infolge der Turbulenz aufeinander stossen und sich zu grösseren Dipolen agglomerieren. Bei diesem bekannten Verfahren erhält man jedoch nur eine niedrigere Agglomerationsrate, wenn die Konzentration der Teilchen und die Teilchengrösse in dem zu reinigenden Gas klein ist.

In der US-A-4 116 790 ist ebenfalls ein Verfahren beschrieben worden, bei dem flüssige oder gasförmige, mit tröpfchenförmigen Verunreinigungen beladene Fluidströme durch ein elektrisches Feld geleitet werden, in dem sich die Verunreinigungen zu grösseren Teilchen agglomerieren, die wiederum in einem nachgeschalteten Fliehkraftabscheider ausgeschieden werden. In dieser Schrift ist jedoch davon die Rede, dass die Teilchen bzw. Verunreinigungen im elektrischen Feld eine Ladung erhalten und sich somit aufgrund dieser Aufladung aneinanderlegen. Bei diesem bekannten Verfahren handelt es sich also nicht um ein Verfahren, wie es durch die obige DE-A-2 408 511 bekannt ist.

Aufgabe der Erfindung ist es, die Wirksamkeit des eingangs genannten Verfahrens zu verbessern und eine vorteilhafte Vorrichtung zur Durchführung eines solchen verbesserten Verfahrens bereitzustellen. Diese Aufgabe wird durch die Merkmale des Anspruchs 1 und des Anspruchs 3 gelöst. Diese Lösung hat den Vorteil, dass grössere Teilchen als Keime zur Verfügung stehen, an denen sich auch bei geringer Partikelkonzentration und bei kleinen Partikeln im Gas ausreichend grosse Agglomerate bilden. Durch die Unteransprüche werden vorteilhafte Weiterbildungen des erfindungsgemässen Verfahrens und der erfindungsgemässen Vorrichtung angegeben. Dabei werden gemäss Anspruch 2 die Partikel bei ihrem Durchlauf durch das elektrische Feld in Schwingungen versetzt, so dass eine längere Wegstrecke durchlaufen wird und somit die Stosshäufigkeit und damit die Agglomerationsrate erhöht wird.

Es ist zwar durch die US-A-4 038 049 ein Verfahren bekannt, bei dem in einer Reinigungseinrichtung ausgeschiedene Teilchen ausgetragen und wieder rückgeführt werden, jedoch handelt es sich dort um eine Einrichtung, bei der ein Wirbelbett erzeugt wird, das von einem elektrischen Spannungsfeld überlagert wird, wobei der Bettinhalt bis zu einem gewissen Grad elektrisch leitend sein soll. Dazu wird eine örtlich begrenzte Schicht aus Sand oder ähnlichen Teilchen, zum Beispiel auch aus dem zu reinigenden Gasstrom zuvor ausgeschiedenen Teilchen, von dem unter hoher Geschwindigkeit zugeführten zu reinigenden Gasstrom durchströmt. Durch den Gasstrom wird der Sand bzw. die Bettfüllung innerhalb eines dort angelegten elektrischen Feldes bewegt, so dass es durchlässig wird und als Filter wirkt. Durch Feuchtigkeit auf den Sandpartikeln oder die Leitfähigkeit von bereits dort gebundenen Partikeln werden die hinzugetragenen ionisierten Teilchen an den Teilchen des Wirbelbetts angelagert und können dann aufgrund der durch die Durchlüftung gegebenen Beweglichkeit des Wirbelbettinhaltes ausgetragen werden. Der dabei entstehende Verlust an Teilchen im Wirbelbett muss durch Rezirkulation oder Neuzufuhr von Teilchen ergänzt werden. Dazu kann wiederum Sand oder gegebenenfalls ausgeschiedene Teilchen verwendet werden, sofern diese sich für eine Wirbelbettfilterung eignen.

Eine solche Einrichtung ist äusserst aufwendig, da dafür Sorge getragen werden muss, dass einmal die auszuscheidenden Teilchen über eine Koronaladevorrichtung aufgeladen werden und ferner das Wirbelbett als Filterbett bereitgestellt und erhalten bleiben muss durch gesteuerte Wiederversorgung der kontinuierlich zur Entsorgung abzuziehenden Wirbelbettfüllung. Es ergibt sich ferner der Nachteil, dass sich mit dem Wirbelbett ein erheblicher Strömungswiderstand dem zu reinigenden Gas entgegenstellt und dass offenbar ein solches Wirbelbett nur vertikal durchströmt unter Beibehaltung einer horizontalen Schichtung erhalten werden kann, was bei einer Reinigung von Abgasen von Brennkraftmaschinen, wie zum Beispiel Dieselmotoren, nicht zu vertreten ist. Demgegenüber stellt das erfindungsgemässe Verfahren und die erfindungsgemässe Vorrichtung eine besonders günstige Lösung dar. Bezüglich der Abgasrückführung zur Erhöhung der Agglomerationsrate erhält man gemäss Anspruch 4 eine besonders einfache Anordnung, wenn der Gastransport durch eine Venturidüse am Koagulatoreingang erfolgt. Mann bekommt ohne zusätzliche bewegliche Teile den erforderlichen Druck zum Transport der Abgase innerhalb der Abgasrückführung.

Zeichnung

Ausführungsbeispiele der Erfindung sind in der beigefügten Zeichnung dargestellt und in der nachfolgenden Beschreibung näher erläutert. Es zeigen Figur 1 eine schematische Darstellung zur Erläuterung des Agglomerationseffektes, Figur 2 das Prinzip der Koagulator-Vorrichtung, Figur 3 den Aufbau eines Zyklons, Figur 4 den Aufbau eines Koagulators mit drei hohlzylindrischen, parallel geschalteten Elektroden, Figur 5 eine Koagulatoranordnung mit ebenen Elektroden und Figur 6 eine schematische Darstellung der Abgasrückführung.

Beschreibung der Ausführungsbeispiele

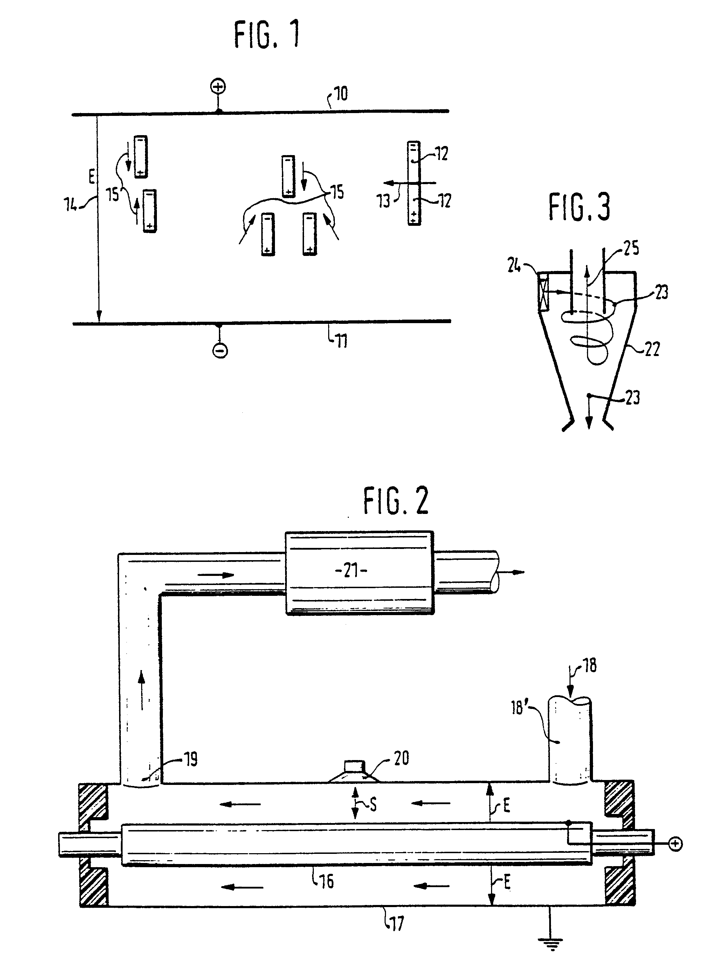

In Figur 1 ist das Prinzip der Koagulation dargestellt, wie es bei dem erfindungsgemässen Verfahren benutzt wird. Zwischen zwei Elektroden 10 und 11 befinden sich Teilchen oder Tröpfchen, im folgenden als Partikel 12 bezeichnet, welche aufgrund eines vorhandenen Gasdruckes in Richtung des Pfeiles 13 bewegt werden. Die Elektorde 10 ist mit dem positiven Pol, die Elektrode 11 mit dem negativen Pol einer nicht dargestellten Hochspannungs-Gleichstromquelle verbunden, welche zwischen den Elektroden 10 und 11 ein elektrisches Feld entsprechend dem Pfeil 14 mit der Feldstärke E erzeugt.

Die Feldstärke E liegt unterhalb der Ionisationsfeldstärke der Anordnung, so dass praktisch keine elektrischen Entladungen auftreten. Bei der anhand von Figur 2 später erläuterten Versuchsanlage liegt beispielsweise diese Feldstärke unter 10 kV/cm, die Mindestfeldstärke bei dieser Versuchsanordnung lag oberhalb 1 kV/cm. Aufgrund des elektrischen Feldes E treten an elektrisch leitfähigen Partikeln 12 Influenzladungen, an dielektrischen Partikeln 12 Polarisation entsprechend den eingezeichneten positiven und negativen Ladungen der Partikel 12 ein, so dass diese Partikel 12 entsprechend den Pfeilen 15 Anziehungskräfte aufeinander ausüben und zu grösseren Agglomeraten koagulieren. Die Influenz- oder Polarisationserscheinung an den Partikeln 12 ist umso stärker, je grösser die Dielektrizitätskonstante oder je besser die Leitfähigkeit der Partikel und je höher die Feldstärke E ist. Eine geringere Dielektrizitätskonstante und eine schlechtere elektrische Leitfähigkeit kann dabei durch eine höhere Feldstärke bis zum Erreichen der Ionisationsfeldstärke ausgeglichen werden, so dass beispielsweise auch kleinste Wasserdampftröpfchen mit einer Dielektrizitätskonstante DK $\cong$ 80 durch die entstehende Polarisation zu grösseren Agglomeraten zusammengeführt werden. Das Verfahren eignet sich also sowohl zum Koagulieren fester Teilchen als auch zum Koagulieren von Tröpfchen, wenn die Dipolbildung der Partikel ausreichend gross ist.

Das erfindungsgemässe Verfahren dient dazu, Partikel aus Gasen, insbesondere aus Abgasen fossiler Brennstoffe wie beispielsweise Dieselmotoren oder Kraft- und Heizungsanlagen zunächst zu grösseren Agglomeraten zu vereinigen, welche entweder aufgrund ihrer Partikelgrösse unschädlich oder ungefährlich sind und nicht weiter beachtet werden müssen oder sich aufgrund ihrer Masse selbsttätig absetzen; beispielsweise könnten sich die Partikel 12 in einem erfindungsgemäss gestalteten Kamin ohne zusätzliche Massnahmen selbständig niederschlagen. Andererseits ergibt sich der Vorteil, dass derartige grössere Agglomerate nach dem Verlassen der Durchführungsvorrichtung in besonders einfachen und funktionell unproblematischen mechanischen Abscheidevorrichtungen leicht abgesondert werden können. Das erfindungssgemässe Verfahren arbeitet nahezu leistungsfrei, da keine elektrischen Ladungen bereitgestellt werden müssen, wie dies bei herkömmlichen Verfahren üblich ist zur Anheftung an die Partikel und zur Erzeugung der Transportkräfte.

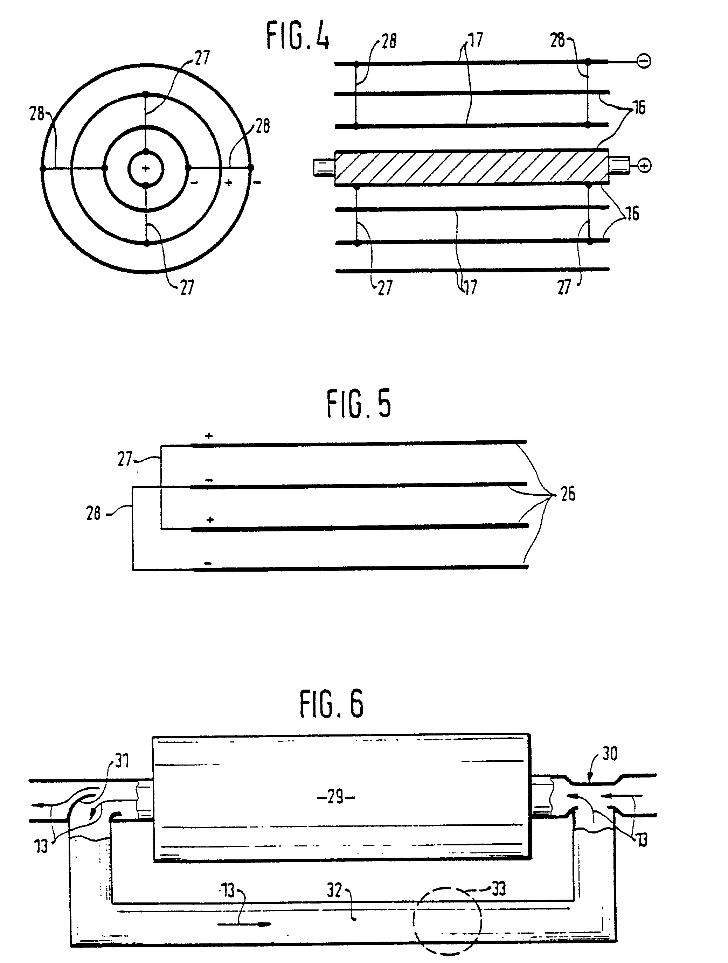

Bei der Anordnung gemäss Figur 1 werden die Partikel 12 durch ein homogenes elektrisches Feld E hindurchgeführt. Stattdessen könnte jedoch auch ein niederfrequentes Wechselfeld oder ein pulsierendes Gleichspannungsfeld verwendet werden, weil auch hierbei die benötigten Influenz- und Polarisationserscheinungen auftreten zur Agglomeration der ursprünglich fein verteilten Partikel, von denen das Gas gereinigt werden soll. Die benötigte Hochspannung kann beispielsweise an der Induktivität eines elektrischen Reihenschwingkreises abgegriffen, durch eine Gleichrichteranordnung gleichgerichtet und durch eine Kapazität geglättet werden. Der Agglomerationseffekt ist umso stärker, je grösser die Konzentration der Partikel 12, die elektrische Feldstärke, die Verweilzeit und die Temperatur in der Anordnung sind. Bei Verringerung der Partikelkonzentration, also beispielsweise bei Betrieb eines Dieselmotors im Teillastbereich, könnte daher ein Ausgleich geschaffen werden durch Erhöhung der elektrischen Feldstärke. Andere Möglichkeiten zur Verstärkung des Agglomerationseffektes, wie sie später anhand der Figuren 2 und 6 noch näher erläutert werden, bestehen in der Verlängerung des Weges der Partikel 12 oder in der Erhöhung der Zahl der Koagulationskeime durch Rückführung eines Teiles des Gases vom Koagulatorausgang zu dessen Eingang. Bei der Rückführung werden durch das mit Agglomeraten nachgereichte Gas grössere Koagulationskeime zur Verfügung gestellt, an denen sich feine Partikel 12 in stärkerem Masse anlagern.

Das erfindungsgemässe Verfahren hat sich insbesondere bewährt zum Reinigen von Abgasen von Dieselmotoren. In den Abgasen des Motors treten in grosser Zahl feine, graphitartige Kohlestoffpartikel 12 auf mit einem mittleren Durchmesser von ca. 0, 2 µm. Nach der Agglomeration der Teilchen aufgrund des elektrischen Feldes E, welches vorzugsweise entlang des Gesamtweges der Partikel 12 durch die verwendete Anlage anliegt, haben die Agglomerate einen mittleren Durchmesser von ca. 30 µm. Diese relativ grossen und schweren Agglomerate lassen sich einerseits leicht mechanisch abscheiden, andererseits kann unter Umständen eine weitere Abscheidung auch entfallen, weil die Partikel aufgrund ihrer Schwerkraft sich selbständig niederschlagen und nicht weiter ausbreiten. Unter Umständen kann dieses selbständige Niederschlagen der Partikel bereits als Abscheidung genutzt werden.

Figur 2 zeigt in schematischer Darstellung eine Vorrichtung zur Durchführung des erfindungsgemässen Verfahrens. Als Elektroden 10 und 11 dienen zwei elektrisch leitfähige Hohlzylinder, vorzugsweise zwei Edelstahl-Hohlzylinder 16 und 17 mit einem Durchmesser von 5 bzw. 20 cm und einer Länge von 100 cm. Der innere Hohlzylinder 16 ist mit dem positiven Pol, der äussere Hohlzylinder 17 mit dem negativen Pol der Gleichspannungs-Hochspannungsquelle verbunden. Die Hochspannung wird zentral dem inneren Hohlzylinder 16 zugeführt, der äussere Hohlzylinder 17 liegt an Masse. Die zu reinigenden Gase 18 treten durch einen Gaseinlass 18' in die Vorrichtung ein und verlassen diese durch einen Gasauslass 19, sie wandern also in Längsrichtung durch die Vorrichtung, an der auf ihrer Gesamtlänge das elektrische Feld E anliegt.

Am äusseren Hohlzylinder 17 ist bei 20 ein Lautsprecher angeordnet, welcher vereinfacht eine akustische Anordnung zur Erzeugung eines mit dem elektrischen Feld E gleichgerichteten Schallfeldes S bezeichnet. Dieses Schallfeld kann im Bedarfsfall, d.h. wenn wenig Partikel 20 im Gas vorhanden sind, dem elektrischen Feld E überlagert werden, so dass die einzelnen Partikel 20 auf ihrem Weg durch die Vorrichtung zusätzlich eine oszillierende Bewegung durchführen, wodurch die Agglomerationsrate ebenfalls erhöht wird. Durch die oszillierende Bewegung steigt die Stosshäufigkeit der Partikel an, so dass auch bei geringerer Konzentration ausreichend grosse Agglomerate die Vorrichtung am Gasauslass 19 verlassen.

Hinter dem Gasauslass 19 ist eine mechanische Abscheidevorrichtung 21 angeordnet, in der die grossen Agglomerate aufgrund ihrer Masse und der hierdurch entstehenden grossen Fliehkräfte oder der groben Körnung besonders leicht abgeschieden werden können. Als Ausführungsbeispiel für einen mechanischen Abscheider 21 ist in Figur 3 ein Zyklon 22 dargestellt. Die mit 23 bezeichneten Agglomerate treten durch eine veränderliche Einlassöffnung 24 in das Innere des Zyklons 22 ein und beschreiben dort eine Schraubenlinie mit mehr oder weniger grossem Durchmesser entsprechend ihrer Masse und der Eintrittsgeschwindigkeit. Die Agglomerate 23 fallen dann entlang des äusseren Randes des Zyklons 22 in eine nicht dargestellte Abscheidekammer, während das gereinigte Abgas bei 25 über ein zentrales Rohr den Zyklon 22 verlässt. Anstelle eines auf dem Fliehkraftprinzip arbeitenden Zyklons 22 kann als mechanische Abscheidevorrichtung 21 jedoch beispielsweise auch ein Prallabscheider oder eine Filtervorrichtung benutzt werden. Prallabscheider arbeiten wegen der hohen Prallkräfte der grossen Agglomerate ebenfalls sehr gut, bei einem Filter kann die Maschenweite entsprechend gross gewählt werden, so dass nur ein verhältnismässig geringer Rückstau entsteht. Auch die Bauform des Koagulators ist nicht auf die in Figur 2 gezeichnete hohlzylindrische Bauweise beschränkt, eine andere vorteilhafte Konstruktion ergibt sich bei Verwendung planparalleler Metallplatten 26, wie sie in Figur 5 dargestellt sind. Zur Erhöhung der Feldstärke bei niedrigerer Spannung können mehrere Elektrodenflächen elektrisch parallel geschaltet werden, wie dies in den Figuren 4 und 5 gezeigt ist. In Figur 4 sind konzentrische Hohlzylinder 16 und 17 parallel geschaltet, in Figur 5 sind ebene Metallplatte 26 verwendet, wobei die elektrische Feldstärke sich aus dem Quotienten der zur Verfügung stehenden Gleichspannung und dem Elektrodenabstand ergibt. Die Verbindungsleitungen zwischen den verschiedenen Elektroden sind mit 27 und 28 bezeichnet.

Figur 6 zeigt das Prinzip der Abgasrückführung, womit grössere Koagulationskeime in einen Koagulator 29 eingebracht werden. Vor dem Koagulator sitzt eine Venturidüse 30, an seinem Auslass ist eine Umlenkklappe 31 vorgesehen, mit deren Hilfe ein Teilstrom vom Koagulatorausgang abgelenkt und über eine Rückführleitung 32 zu seinem Eingang zurückgeführt wird. Der durch die verschiedenen Pfeile 13 angedeutete Gastransport wird bewirkt durch die erhöhte Strömungsgeschwindigkeit im Bereich der Venturidüse 30 oder wahlweise, gegebenenfalls auch zusätzlich, mittels einer gestrichelt angedeuteten Pumpe 33. Die Abgasrückführung erlaubt eine Erhöhung der Agglomerationsrate, da grössere Keime im Koagulator 29 bereitgestellt werden, an denen sich die feineren Partikel leichter anlagern können. Auf diese Weise werden auch bei geringerem Anfall der zu entfernenden Partikel am Ausgang des Koagulators bzw. am Eingang einer nachgeschalteten mechanischen Abscheidevorrichtung ausreichend grosse Agglomerate zur Verfügung gestellt.

Das vorgeschlagene Verfahren eignet sich zum Reinigen von Gasen hinsichtlich solcher Partikel, bei denen eine ausreichende Dipolbildung aufgrund des elektrischen Feldes erfolgt, d.h. bei Partikeln mit einer Dielektrizitätskonstanten DK wesentlich grösser als 1. Besonders gute Erfolge sind erzielt worden beim Reinigen von Abgasen von Dieselmotoren. Da ähnliche Abgaszusammensetzungen auch bei Abgasen aus Verbrennungsvorgängen anderer fossiler Brennstoffe zu erwarten sind, ist eine entsprechende Eignung für alle derartigen Abgase zu erwarten. Weiterhin gelang es jedoch auch, Wasserdampf auf die vorgeschlagene Art abzusondern, d.h. Partikel 12 mit einer Dielektizitätskonstante DK $\cong$ 80, so dass sich das erfindungsgemässe Verfahren auch zum Reinigen von Dämpfen in entsprechender Weise anwenden lässt.

Gegenüber herkömmlichen mechanischen und elektrischen Abscheidemethoden ergeben sich wesentliche Vorteile. In rein mechanischen Abscheidern, beispielsweise in Zyklonen, werden die Partikel 12 vom Trägergas durch Fliehkräfte getrennt, die in einer rotierenden Strömung auf die Partikel 12 einwirken. Die Abscheidungsrate ist hierbei jedoch nur befriedigend für Partikel mit einem Durchmesser, der grösser als 1 μm ist. Ausserdem entsteht bei mechanischen Abscheidern, die für kleine Partikel geeignet sind, ein beachtlicher Druckverlust, so dass derartige Anlagen nicht überall einsetzbar sind und beispielsweise im Abgassystem von Fahrzeugen erhebliche Schwierigkeiten bereiten. Ähnliche Vorteile ergeben sich durch die Agglomeration der Partikel beim erfindungsgemässen Verfahren auch gegenüber keramischen Filtern, da diese sich wegen ihrer kleinen Poren relativ rasch zusetzen, so dass der Druck in dem Abgassystem ansteigt. Abhilfe kann nur geschaffen werden durch Filterwechsel oder durch relativ aufwendiges Ausbrennen der Filter. Bei herkömmlichen Elektroabscheidern nützt man für die Abtrennung der Partikel 12 vom Trägergas die Kraftwirkung auf geladene Teilchen im elektrischen Feld. Die zu reinigenden Gase werden dabei durch eine Kammer geleitet, in welcher – meist mittels eines sogenannten Sprühdrahtes – Ionen erzeugt werden, die sich zu einer geerdeten Kammerwand hin bewegen. Die Ionen lagern sich auf ihrem Weg im Elektroabscheider teilweise den zu entfernenden Partikeln an, die nun ihrerseits geladen sind und damit eine Kraftwirkung im elektrischen Feld erfahren. Für die Aufrechterhaltung der elektrischen Entladung ist eine beachtliche Leistung erforderlich, deren Bereitstellung Schwierigkeiten bereitet. Ferner schlagen sich die abgeschiedenen Partikel an einer Kammerwand nieder, von der sie wieder abgelöst und entfernt werden müssen. Letzterer Vorgang ist bei kontinuierlich arbeitenden Anlagen schwer zu realisieren.

Bei dem erfindungsgemässen Verfahren brauchen keine Ladungsträger erzeugt und keine elektrische Entladung aufrechterhalten zu werden, so dass praktisch keine elektrische Leistung verbraucht wird. Partikel 12 mit hinreichend grosser Dielektrizitätskonstante, bei denen sich an gegen-überliegenden Partikelseiten unter der Einwir-kung des elektrischen Feldes eine ausreichende Ladungsmenge bildet, ballen sich aufgrund der Dipolwirkung zu Agglomeraten zusammen. Diese sind ausreichend stabil und halten ihren Zusammenschluss auch noch während nachfolgender mechanischer Abscheideverfahren aufrecht. Bei einem homogenen elektrischen Feld erfolgt eine besonders wirksame Ausrichtung der Teilchen entlang der elektrischen Feldlinien, so dass rasch die erwünschte Koagulation und Agglomeration stattfindet. Sobald ein kritischer Abstand unterschritten wird, bewegen sich die Teilchen entsprechend dem Coulomb'schen Gesetz aufeinander zu und schliessen sich zu grösseren Einheiten zusammen. Die Koagulationsrate wird dabei bestimmt vom geometrischen Stossquerschnitt der Partikel 12, wesentlich stärker jedoch noch vom sogenannten elektrischen Stossquerschnitt, der sich durch die Ansammlung oder Bildung von Ladungen an den Enden der Partikel 12 ergibt. Bei Russpartikeln ist der elektrische Stossquerschnitt aufgrund der durch die Ladungskonzentration entstehenden Anziehungskräfte um den Faktor $10^5$ bis $10^8$ grösser als der geometrische Stossquerschnitt. Die elektrischen Anziehungskräfte werden entsprechend stark wirksam, so dass sich rasch grosse Agglomerate von Partikeln 12 bilden.

**Patentansprüche**

1. Verfahren zum Reinigen von Brennkraftmaschinenabgasen von Teilchen oder Tröpfchen, unter Verwendung eines elektrischen Hochspannungsfeldes, das bei einer Feldstärke (E) unter-halb der Ionisationsfeldstärke die Teilchen oder Tröpfchen (12) in einer als Koagulator dienenden Durchführungsvorrichtung (10, 11, 17, 18) durch Influenz oder Polarisation zu elektrischen Dipolen formt, die unter Einfluss der Polarisation grösseren Agglomeraten (23) koaguliert den Koagulator verlassen und nach ihrem Austritt aus dem Koagulator (17, 18) mechanisch abgeschieden werden, dadurch gekennzeichnet, dass zur Bereitstellung von Koagulationskeimen für die im Gas enthaltenden Teilchen ein Teil des Gases vom Ausgang des Koagulators zu dessen Eingang zurückgeführt wird.

2. Verfahren nach Anspruch 1, dadurch gekennzeichnet, dass dem elektrischen Feld (E) zur Erhöhung der Agglomerationsrate ein Schallfeld (S) überlagert wird, das parallel zum elektrischen Feld verläuft.

3. Vorrichtung zur Durchführung des Verfahrens nach Anspruch 1 mit einem Koagulator (29), der wenigstens zwei konzentrische Hohlzylinder (17, 16) aufweist, die mit einer Hochspannungsquelle verbunden sind und welcher Koagulator (29) einen Eintritt eines Gasführungsrohres (18) am einen Ende des zwischen den Hohlzylindern (16, 17) gebildeten Raumes für das mit Teilchen und/oder Tröpfchen beladene Abgas aufweist und am anderen Ende einen Austritt (19) für das mit koagulierten Teilchen und/oder Tröpfchen beladene Abgas aufweist, dem ein mechanischer Abscheider (22) nachgeschaltet ist, dadurch gekennzeichnet, dass von dem Austritt (19) eine Abgasrückführleitung (32) in dem Bereich einer örtlichen Durchmesserverengung (30) des Gaszuführrohres (Venturi) führt.

4. Vorrichtung nach Anspruch 3, dadurch gekennzeichnet, dass in der Abgasrückführleitung (32) eine Pumpe (33) angeordnet ist.

**Revendications**

1. Procédé pour débarrasser de particules ou bien de gouttelettes, des gaz d'échappement de moteurs à combustion interne, en utilisant un champ électrique haute tension, qui, pour une intensité de champ (E) se situant au-dessous de l'intensité d'ionisation transforme par influence ou polarisation, dans un dispositif à passage (10, 11, 17, 18) servant de coagulateur, les particules ou les gouttelettes (12) en dipoles électriques qui, sous l'influence de la polarisation, se coagulent en agglomérats plus importants (23) et qui, après leur sortie du coagulateur (17, 18) sont séparées mécaniquement, procédé caractérisé en ce que pour produire des germes de coagulation pour les particules contenues dans le gaz, une partie du gaz est recyclé entre la sortie du coagulateur et son entrée.

2. Procédé selon la revendication 1, caractérisé en ce que, pour augmenter le taux d'agglomération, on superpose au champ électrique (E), un champ acoustique (S) parallèle au champ électrique.

3. Dispositif pour la mise en œuvre du procédé selon la revendication 1, avec un coagulateur (29) qui comporte au moins deux cylindres creux concentriques (16, 17), reliés à une source haute tension, ce coagulateur (29) comportant une entrée d'un tube de canalisation de gaz (18) à une extrémité de l'espace ménagé entre les cylindres creux (16, 17) pour le gaz d'échappement chargé de particules et/ou de gouttelettes, et comportant à l'autre extrémité, une sortie (19) pour le gaz d'échappement chargé de particules et/ou de gouttelettes coagulées, un séparateur mécanique (22) étant branché à la suite de ce coagulateur, dispositif caractérisé en ce que, à partir de la sortie (19), une canalisation (32) de recyclage des gaz d'échappement, aboutit dans la zone d'une réduction locale (30) du diamètre du tube d'alimentation en gaz (Venturi).

4. Dispositif selon la revendication 3, caractérisé en ce qu'une pompe (33) est disposée sur la canalisation (32) de recyclage des gaz d'échappement.

## Claims

1. Process for the purification of internal combustion engine exhaust gases from particles or droplets, by application of a high-voltage electric field, which, at a field stength (E) below the ionization field stength, forms the particles or droplets (12), in a processing device (10, 11, 17, 18) serving as coagulator, by induction or polarization, into electric dipoles, which leave the coagulator while they are coagulated into larger agglomerates (23) under the influence of the polarization, and are mechanically separated after their exit from the coagulator (17, 18), characterized in that, in order to provide coagulation nuclei for the particles contained in the gas, a part of the gas is returned from the outlet of the coagulator to the inlet of the latter.

2. Process according to Claim 1, characterized in that, in order to increase the degree of agglomeration, there is superposed on the electric field (E) an acoustic field (S), which extends parallel to the electric field.

3. Device for carrying out the process according to Claim 1, having a coagulator (29), which exhibits at least two concentric hollow cylinders (17, 16), which are connected to a high-voltage source, and which coagulator (29) exhibits an inlet of a gas conduit (18) at one of the ends of the space, formed between the hollow cylinders (16, 17), for the exhaust gas charged with particles and/or droplets, and at the other end an outlet (19) for the exhaust gas charged with coagulated particles and/or droplets, downstream of which outlet a mechanical separator (22) is connected, characterized in that from the outlet (19) an exhaust gas return duct (32) leads in the region of a local diameter constriction (30) of the gas supply pipe (venturi).

4. Device according to Claim 3, characterized in that a pump (33) is disposed in the exhaust gas return duct (32).

## FIG. 1

## FIG. 3

## FIG. 2

# FIG. 4

# FIG. 5

# FIG. 6